# EUROPEAN PATENT SPECIFICATION

(11) **EP 2 218 492 B1**
(45) Date of publication and mention of the grant of the patent: **08.05.2013**
(21) Application number: 08856278.0
(22) Date of filing: 24.10.2008
(51) Int. Cl.: B01D 53/68, C01B 7/07, C01B 7/19

(54) **METHOD FOR REMOVAL OF ClO3F**
VERFAHREN ZUM ENTFERNEN VON CIO3F
PROCÉDÉ D'ÉLIMINATION DE CIO3F

(30) Priority: 03.12.2007 JP 2007312218
(43) Date of publication of application: 18.08.2010
(73) Proprietor: Central Glass Company, Limited, Yamaguchi 755-0001 (JP)
(72) Inventor: KIKUCHI, Akiou, Yamaguchi 755-0001 (US); MORI, Isamu, Yamaguchi 755-0001 (US)
(74) Representative: Manitz, Gerhart
(86) International application number: PCT/JP2008/069352
(87) International publication number: WO 2009/072360

(56) References cited:
- JP-A- 4 122 420
- JP-A- 2006 231 105

## Description

This invention relates to a method for removing ClO₃F in a gas containing ClO₃F as an impurity.

### BACKGROUND ART

Perchloryl fluoride (ClO₃F) is produced in general by a reaction of chlorate of alkali metal or alkaline earth metal with a gas containing fluorine (F₂) or a gas containing F₂, or by a reaction of a perchlorate of alkali metal or alkaline earth metal with a fluorinating agent [for example, fluorosulfaric acid (HSO₃F) or the like].

ClO₃F is a thermally very stable compound and therefore cannot thermally decompose if it is not heated to 470 °C. Additionally, it has such a characteristic as to be insoluble in water and not to be able to be decomposed with alkali. Further, in case that ClO₃F is contained in a gas which is similar in physical property to ClO₃F, it is difficult to make a separation and a concentration by a distillation, so that there is a problem that removal of it is difficult.

In general, as a method for removing an impurity contained in a gas, it has been reported to thermally decompose the impurity by using the difference in thermal stability between the gas and the impurity to be removed so as to remove the impurity contained in the gas (see Patent Citation 1).

As other methods for removing an impurity contained in a gas, a method using a purification agent such as zeolite, for example, in a purification of NF₃ used as a cleaning gas for a semiconductor (see Non-patent Citation 1).

Additionally, a method using a reducing agent has been reported as a method for removing NOx as a impurity in a gas (see Patent Citation 2); however, a method for removing ClO₃F has not been reported.
Patent Citation 1: Japanese Patent Provisional Publication No. 1-261210
Patent Citation 2: Japanese Patent Provisional Publication No. 9-108537
Non-patent Citation 1: Chem. Eng. 84, 116, (1977)
EP 0 431 351 A1 discloses a method for the removal of fluorine and/or inorganic fluorides from gases, wherein the gas mixture to be purified is contacted with an absorber and/or catalyst mass, which contains as a main component titanium dioxide.
JP 2006-231,105 A relates to a method for removing an oxidizing gas containing fluorine gas or oxygen fluoride from fluorine-containing exhaust gas comprises the step of using a liquid absorbent containing a mixture of a basic compound with a sulfur-based reducing agent selected from the group consisting of thiosulfate, sulfide and hydrosulfide.

### DISCLOSURE OF INVENTION

### PROBLEMS TO BE SOLVED BY INVENTION

In case that ClO₃F is contained, for example, in a material gas or a cleaning gas used in production of a semiconductor in a field requiring a high purity, it is required to remove ClO₃F to a low concentration. Additionally, ClO₃F is highly toxic and therefore required to be removed to not higher than 3 ppm as a TLV value.

In a method for thermally decomposing an impurity by using the above-mentioned thermal stability in order to remove ClO₃F, ClO₃F is thermally very stable, so that ClO₃F can be removed in case of being contained as an impurity in a similarly thermally stable gas.

Additionally, also in a method using the above-mentioned purification agent such as zeolite or the like, ClO₃F cannot be removed.

Thus, there is no report regarding a method for removing ClO₃F.

Accordingly, an object of the present invention is to provide an inexpensive method for removing ClO₃F.

### MEANS FOR SOLVING PROBLEM

The present inventors have found that ClO₃F can be removed by reacting a gas containing ClO₃F with a reducing agent thereby reducing ClO₃F.

That is,
The present invention relates to a method for removing ClO₃F by reacting a gas containing ClO₃F as an impurity with a reducing agent, wherein the reducing agent is a dithionite containing aqueous solution and a base coexists in the aqueous solution.
Preferably, the reducing agent is a sodium dithionite containing aqueous solution.
Moreover, it is preferred that the base is potassium hydroxide.

### EFFECTS OF INVENTION

According to the present invention, it is made possible to remove ClO₃F as an impurity contained in a gas.

### BEST MODE FOR CARRYING OUT INVENTION

Hereinafter, the content of the present invention will be discussed.

Here, a reducing agent means a compound lower in standard electrode potential than ClO₃F in an aqueous solution, in which the reducing agent is preferably a compound having a standard electrode potential of not higher than -0.092 V in an aqueous solution. As the standard electrode potential in the compound is lower, better effects can be obtained. According to the present invention, the reducing agent "is a dithionite containing aqueous solution, wherein the dithionite compound is preferably sodium dithionite (Na₂S₂O₄). According to the present invention, a gas-liquid contact method is used in which the reducing agent is used in the form of an aqueous solution. Moreover a base coexists in the aqueous solution containing the reducing agent when the reducing agent is used. The effect of the coexisting base is a role for preventing a deterioration of the reducing agent under the action of an acid produced after a reduction. Kinds of the base are not particularly limited as far as the base does not directly react with the reducing agent.

A counter flow contact or a parallel flow contact can be used as a method for contacting the reducing agent with a gas containing ClO₃F as a impurity. The counter flow contact is preferable, taking account of the contact efficiency between a gas and a liquid.

A temperature of a contact reaction with the reducing agent is not particularly recommended. It is assumed that a removal effect lowers at a temperature not lower than a temperature at which the reducing agent decomposes, and therefore it is preferable to use the reducing agent at the temperature lower than the temperature at which the reducing agent decomposes. For example, in case of Na₂S₂O₄, it is preferable to be used at not higher than 60 °C.

It is preferable that the concentration of the reducing agent is, for example, not less than 0.29 mol/l when Na₂S₂O₄ is used as the reducing agent. If the concentration is less than 0.29 mol/l, a sufficient removal effect cannot be exhibited. Hereinafter, the present invention will be discussed in detail with reference to Examples.

Hereinafter, the present invention will be discussed in detail with reference to Examples.

### EXAMPLES

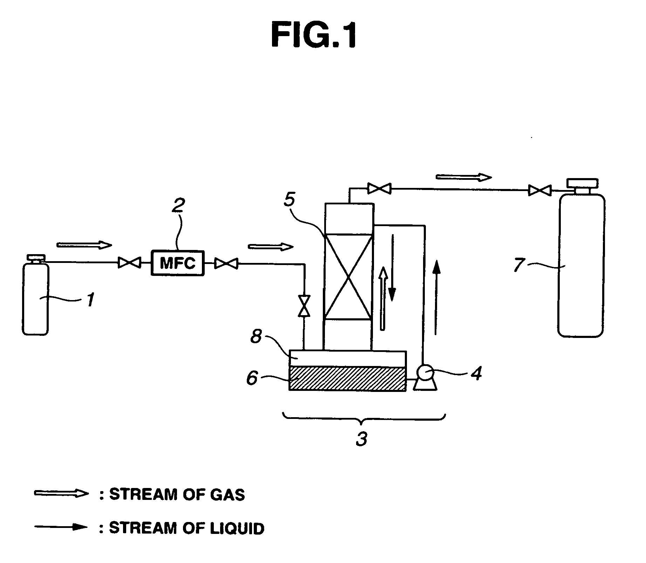

Fig. 1 shows a rough system view of an experiment using the present invention. As a ClO₃F containing gas serving as an object for removal treatment of ClO₃F, a gas (Examples 1 and 5 to 11, and Comparative Examples 1 and 2) prepared by diluting ClO₃F with N₂; a gas (Example 2) prepared by diluting ClO₃F with CH₄; and a gas (Examples 3 and 4) prepared by diluting ClO₃F with NF₃ are used.

A wet harm removing apparatus 3 includes a packed column 5 filled with packing, a reaction liquid 6 to be reacted with the introduced treatment object gas, a liquid tank 8 for storing the reaction liquid 6, and a liquid feed pump 4 for liquid-feeding the reaction liquid 8 within the liquid tank 5 into a position above the packing, in which the ClO₃F removal treatment object gas which is introduced from the bottom section of the packed column 5 makes a counter flow contact with the reaction liquid 6 in the packed column 5 and is released from the upper section of the packed column 5.

The gas of the object of the ClO₃F removal treatment from a steel bottle 1 filled with the gas of ClO₃F removal treatment object is controlled to have a certain flow amount by using a massflow controller 2 and introduced into the wet harm removing apparatus 3 so as to make a counter flow contact with the reaction liquid 6. Thereafter, a gas released from the wet harm removing apparatus 3 is trapped by an empty container 7.

The gas trapped in the empty container 7 is subjected to an analysis using a Fourier transform infrared spectrophotometer (FT-IR (IG-1000 produced by Otsuka Electronics Co., Ltd.)) having a detection lower limit for ClO₃F being 0.5 volppm, in which the concentration of ClO₃F is measured.

### [Example 1]

A packed column 5 made of vinyl chloride and having a length of 1700 cm and an inner diameter of 50 mm were filled with Raschig rings having a diameter of 6mm and made of SUS. N₂ containing 1410 volppm of ClO₃F as the gas of the ClO₃F removal treatment object was introduced at 274 Nml/min by using the massflow controller 2 into the wet harm removing apparatus 3 provided with an aqueous solution whose Na₂S₂O₄ concentration was 1.5 mol/l and KOH concentration was 0.15 mol/1, the aqueous solution being used as the reaction liquid 6. Thereafter, a gas released from the wet harm removing apparatus 3 was trapped by the empty container 7.

The ClO₃F concentration in the gas trapped in the empty container 7 was analyzed by the FT-IR (IG-1000 produced by Otsuka Electronics Co., Ltd.). As a result, ClO₃F in N₂ was less than 0.5 volppm which was the detection lower limit, so that it was confirmed that ClO₃F could be removed.

### [Example 2]

A procedure was conducted in the same condition as that in Example 1 with the exception that CH₄ containing 2280 volppm of ClO₃F was used as the gas of the ClO₃F removal treatment object. Similarly to Example 1, the ClO₃F concentration in the gas trapped after passing through the wet harm removing apparatus 3 was analyzed by the FT-IR (IG-1000 produced by Otsuka Electronics Co., Ltd.).

As a result, the ClO₃F concentration was less than 0.5 volppm which was the detection lower limit, so that it was confirmed that ClO₃F in CH₄ could be removed.

### [Example 3]

A procedure was conducted in the same condition as that in Example 1 with the exception that NF₃ containing 2280 volppm of ClO₃F was used as the gas of the ClO₃F removal treatment object. Similarly to Example 1, the ClO₃F concentration in the gas trapped after passing through the wet harm removing apparatus 3 was analyzed by the FT-IR (IG-1000 produced by Otsuka Electronics Co., Ltd.).

As a result, the ClO₃F concentration was less than 0.5 volppm which was the detection lower limit, so that it was confirmed that ClO₃F in CH₄ could be removed.

### [Example 4]

A procedure was conducted in the same condition as that in Example 1 with the exception that NF₃ containing 6680 volppm of ClO₃F was used as the gas of the ClO₃F removal treatment object. Similarly to Example 1, the ClO₃F concentration in the gas trapped after passing through the wet harm removing apparatus 3 was analyzed by the FT-IR (IG-1000 produced by Otsuka Electronics Co., Ltd.).

As a result, the ClO₃F concentration was less than 0.5 volppm which was the detection lower limit, so that it was confirmed that ClO₃F in NF₃ could be removed.

### [Example 5]

A procedure was conducted in the same condition as that in Example 1 with the exception that N₂ containing 2280 volppm of ClO₃F was used as the gas of ClO₃F removal treatment object and that an aqueous solution whose Na₂S₂O₄ concentration was 1.0 mol/l and NaOH concentration was 1.0 mol/l was used as the reaction liquid 6. Similarly to Example 1, the ClO₃F concentration in the gas trapped after passing through the wet harm removing apparatus 3 was analyzed by the FT-IR (IG-1000 produced by Otsuka Electronics Co., Ltd.).

[0031] As a result, the ClO₃F concentration was less than 0.5 volppm which was the detection lower limit, so that it was confirmed that ClO₃F in N₂ could be removed.

### [Example 6]

A procedure was conducted in the same condition as that in Example 1 with the exception that N₂ containing 2358 volppm of ClO₃F was used as the gas of the ClO₃F removal treatment object and that an aqueous solution whose Na₂S₂O₄ concentration was 1.0 mol/l was used as the reaction liquid 6. Similarly to Example 1, the ClO₃F concentration in the gas trapped after passing through the wet harm removing apparatus 3 was analyzed by the FT-IR (IG-1000 produced by Otsuka Electronics Co., Ltd.).

As a result, the ClO₃F concentration was less than 0.5 volppm which was the detection lower limit, so that it was confirmed that ClO₃F in N₂ could be removed.

### [Example 7]

A procedure was conducted in the same condition as that in Example 1 with the exception that N₂ containing 2280 volppm of ClO₃F was used as the gas of the ClO₃F removal treatment object and that an aqueous solution whose Na₂S₂O₄ concentration was 0.2 mol/l and KOH concentration was 1.0 mol/l was used as the reaction liquid 6. Similarly to Example 1, the ClO₃F concentration in the gas trapped after passing through the wet harm removing apparatus 3 was analyzed by the FT-IR (IG-1000 produced by Otsuka Electronics Co., Ltd.).

As a result, the ClO₃F concentration was 6.7 volppm, so that it was confirmed that ClO₃F in N₂ could be removed.

### [Example 8]

A procedure was conducted in the same condition as that in Example 1 with the exception that N₂ containing 2280 volppm of ClO₃F was used as the gas of the ClO₃F removal treatment object and that an aqueous solution whose Na₂S₂O₄ concentration was 0.15 mol/l and KOH concentration was 1.0 mol/l was used as the reaction liquid 6. Similarly to Example 1, the ClO₃F concentration in the gas trapped after passing through the wet harm removing apparatus 3 was analyzed by the FT-IR (IG-1000 produced by Otsuka Electronics Co., Ltd.).

As a result, the ClO₃F concentration was 17.2 volppm, so that it was confirmed that ClO₃F in N₂ could be removed.

### [Example 9]

A procedure was conducted in the same condition as that in Example 1 with the exception that N₂ containing 4459 volppm of ClO₃F was used as the gas of the ClO₃F removal treatment object and that an aqueous solution whose Na₂SO₃ concentration was 1.0 mol/l and KOH concentration was 1.0 mol/l was used as the reaction liquid 6. Similarly to Example 1, the ClO₃F concentration in the gas trapped after passing through the wet harm removing apparatus 3 was analyzed by the FT-IR (IG-1000 produced by Otsuka Electronics Co., Ltd.).

As a result, the ClO₃F concentration was 1502 volppm, so that it was confirmed that ClO₃F in N₂ could be removed.

### [Comparative Example 1]

A procedure was conducted in the same condition as that in Example 1 with the exception that N₂ containing 2280 volppm of ClO₃F was used as the gas of the ClO₃F removal treatment object and that water was used as the reaction liquid 6 in the wet harm removing apparatus 3. Similarly to Example 1, the ClO₃F concentration in the gas trapped after passing through the wet harm removing apparatus 3 was analyzed by the FT-IR (IG-1000 produced by Otsuka Electronics Co., Ltd.).

As a result, the ClO₃F concentration was 2280 volppm, so that it was confirmed that ClO₃F in N₂ could not be removed.

### [Comparative Example 2]

A procedure was conducted in the same condition as that in Example 1 with the exception that N₂ containing 3580 volppm of ClO₃F was used as the gas of the ClO₃F removal treatment object and that a HF aqueous solution having a 4 % concentration was used as the reaction liquid 6 in the wet harm removing apparatus 3. Similarly to Example 1, the ClO₃F concentration in the gas trapped after passing through the wet harm removing apparatus 3 was analyzed by the FT-IR (IG-1000 produced by Otsuka Electronics Co., Ltd.).

As a result, the ClO₃F concentration was 3580 volppm, so that it was confirmed that ClO₃F in N₂ could not be removed.

The above-mentioned measurement results are shown in Table 1.

**[Table 1]**

| Example | ClO₃F concentration (volppm) before passing through wet harm removing apparatus | ClO₃F concentration (volppm) after passing through wet harm removing apparatus | Dilution gas |
|---|---|---|---|
| Example 1 | 1410 | <0.5 | N₂ |
| Example 2 | 2280 | <0.5 | CH₄ |
| Example 3 | 2280 | <0.5 | NF₃ |
| Example 4 | 6680 | <0.5 | NF₃ |
| Example 5 | 2280 | <0.5 | N₂ |
| Example 6 | 2358 | <0.5 | N₂ |
| Example 7 | 2280 | 6.7 | N₂ |
| Example 8 | 2280 | 17.2 | N₂ |
| Example 9 | 4459 | 1502 | N₂ |
| Comparative Example 1 | 2280 | 2280 | N₂ |
| Comparative Example 2 | 3580 | 3580 | N₂ |

### INDUSTRIAL USABILITY

The present invention can be used as a harm removing means for discharged gas from a semiconductor plant, a chemical plant or the like which uses, for example, chloride gas or fluoride gas, or as a purifying means used during production of chloride gas or fluoride gas.

### BRIEF DESCRIPTION OF THE DRAWING

[Fig. 1] is a rough system view of an experimental apparatus used in connection with the present invention.

### EXPLANATION OF REFERNECE NUMERALS

1: gas steel bottle containing ClO₃F
2: massflow controller
3: wet harm removing apparatus
5: packed column
6: reaction liquid
7: empty container
8: liquid tank

## Claims

1. A method for removing ClO₃F by reacting a gas containing ClO₃F as an impurity with a reducing agent, wherein the reducing agent is a dithionite containing aqueous solution and a base coexists in the aqueous solution.

2. A method for removing ClO₃F as claimed in Claim 1, wherein the reducing agent is a sodium dithionite containing aqueous solution.

3. A method for removing ClO₃F as claimed in Claim 1 or 2, wherein the base is potassium hydroxide.

## Patentansprüche

1. Verfahren zum Entfernen von ClO₃F durch Reagieren eines ClO₃F als eine Verunreinigung enthaltenden Gases mit einem Reduktionsmittel, wobei das Reduktionsmittel eine Dithionit enthaltende wässrige Lösung ist, und, wobei in der wässrigen Lösung ebenfalls eine Base vorliegt.

2. Verfahren zum Entfernen von ClO₃F nach Anspruch 1, wobei das Reduktionsmittel eine Natriumdithionit enthaltende wässrige Lösung ist.

3. Verfahren zum Entfernen von ClO₃F nach Anspruch 1 oder 2, wobei die Base Kaliumhydroxid ist.

## Revendications

1. Procédé pour éliminer le ClO₃F en faisant réagir un gaz contenant du ClO₃F comme impureté avec un agent réducteur, dans lequel l'agent réducteur est une solution aqueuse contenant un dithionite, et une base coexiste dans la solution aqueuse.

2. Procédé pour éliminer le ClO₃F suivant la revendication 1, dans lequel l'agent réducteur est une solution aqueuse contenant du dithionite de sodium.

3. Procédé pour éliminer le ClO₃F suivant la revendication 1 ou 2, dans lequel la base est l'hydroxyde de potassium.
